# EUROPEAN PATENT APPLICATION

(11) **EP 4 787 975 A1**
(43) Date of publication of application: **05.08.2026**
(21) Application number: 23954277.2
(22) Date of filing: 28.09.2023
(51) Int. Cl.: H04W 52/02, H04W 28/04, H04W 72/1273, H04W 72/21, H04L 1/1607, H04L 1/1829, H04L 1/1867, H04L 5/00

(54) **TERMINAL, BASE STATION, AND WIRELESS COMMUNICATION SYSTEM**

(71) Applicant: 1FINITY INC., Kawasaki-shi, Kanagawa 211-8588 (JP)
(72) Inventor: CHENG, Huiting, Kawasaki-shi, Kanagawa 211-8588 (JP); SHIMOMURA, Tsuyoshi, Kawasaki-shi, Kanagawa 211-8588 (JP)
(74) Representative: Haseltine Lake Kempner LLP
(86) International application number: PCT/JP2023/035398
(87) International publication number: WO 2025/069301

(57) **Abstract**

A terminal, including a receiver configured to receive a first signal including first information indicating that Cell DTX (discontinuous transmission) is enabled from a base station, and a controller configured to control whether or not to generate feedback information with respect to a resource preset for receiving a signal from the base station according to whether or not an inactive section of the Cell DTX and the resource overlap.

## Description

### [Technical Field]

The present embodiment relates to a terminal, a base station, and a wireless communication system.

### [Background Art]

In the 3rd generation partnership project (3GPP)^{®}, which is a standardization project, as New Radio (NR) (also referred to as "5G"), which is the fifth generation mobile communication, technical specifications of communication standards that satisfy requirements of enhanced mobile broadband (eMBB), massive machine type communications (MTC), and ultra-reliable and low latency communications (URLLC) have been established (Non Patent Documents 1 to 13).

In 3GPP, a hybrid automatic repeat request (HARQ) technology is adopted to realize efficient data transmission. In HARQ, a reception device requests a transmission device side for, for example, retransmission of data that was not correctly decoded in the processing of a layer 1 protocol layer. When the retransmission of data is requested, the transmission device side transmits retransmission data corresponding to the retransmission request of the original data that has not been correctly decoded by the reception device side. On the reception device side, the data that has not been correctly decoded and the retransmission data are combined to decode the data. This realizes highly efficient and highly accurate retransmission control. Note that, in a hybrid automatic repeat request, acknowledgement (ACK) information is transmitted in a case where the reception device has correctly decoded the data, and negative-acknowledgement (NACK) information is transmitted in a case where the reception device does not correctly decode the data.

In addition, in 3GPP, a technology for network energy savings (NES) has been studied to reduce power consumption on a network side (that is, a base station device and core network equipment) (Non Patent Document 14).

As one of techniques in the NES, Cell DTX/DRX for realizing discontinuous reception (DRX) and/or discontinuous transmission (DTX) in a cell unit has been studied. Cell DTX/DRX is a technology in which a base station device sets an active period and an inactive period (non-active period) in a cell unit, and the base station device performs normal transmission and reception only in the active period and restricts transmission and reception in the inactive period, thereby reducing power consumption (Non Patent Documents 14 to 16).

Note that it has been agreed that Cell DTX/DRX is activated using a physical downlink control channel (PDCCH) which is a signal of a radio resource control (RRC) layer or a downlink control channel (Non Patent Documents 15 and 16).

### [Prior Art Reference]

### [Non-Patent Document]

[Non Patent Document 1]
   3GPP TS 38.133 V17.10.0
[Non Patent Document 2]
   3GPP TS 38.201 V17.0.0
[Non Patent Document 3]
   3GPP TS 38.202 V17.3.0
[Non Patent Document 4]
   3GPP TS 38.211 V17.5.0
[Non Patent Document 5]
   3GPP TS 38.212 V17.5.0
[Non Patent Document 6]
   3GPP TS 38.213 V17.6.0
[Non Patent Document 7]
   3GPP TS 38.214 V17.6.0
[Non Patent Document 8]
   3GPP TS 38.215 V17.3.0
[Non Patent Document 9]
   3GPP TS 38.300 V17.5.0
[Non Patent Document 10]
   3GPP TS 38.321 V17.5.0
[Non Patent Document 11]
   3GPP TS 38.322 V17.3.0
[Non Patent Document 12]
   3GPP TS 38.323 V17.5.0
[Non Patent Document 13]
   3GPP TS 38.331 V17.5.0
[Non Patent Document 14]
   3GPP TR 38.864 V18.1.0
[Non Patent Document 15]
   R2-2306553
[Non Patent Document 16]
   R1-2306262

### [Summary of Invention]

### [Problems to be Solved by Invention]

There is semi-persistent scheduling (SPS), which is a method in which a terminal sets a resource for receiving a signal from a base station in advance and receives the signal at the set resource.

However, a situation in which the processing of Cell DTX/DRX and, for example, communication using a preset resource such as SPS are performed at the same time is conceivable, but details of processing with respect to such a situation are not yet determined. Therefore, there is a possibility that the processing of Cell DTX/DRX may be inefficient in the entire wireless communication system.

As described above, in the processing related to Cell DTX/DRX, it is important to consider a situation in which the processing of Cell DTX/DRX and, for example, communication using a preset resource such as SPS are performed at the same time. Note that the processing related to Cell DTX/DRX includes signal processing including the transmission and reception of HARQ feedback information in a section in which Cell DTX/DRX is performed.

The disclosed technology has been made in view of what has been described above, and an object thereof is to provide a method enabling processing related to Cell DTX/DRX to be efficiently performed.

### [Means to Solve the Problem]

According to an aspect of the embodiments, a terminal, including a receiver configured to receive a first signal including first information indicating that Cell DTX (discontinuous transmission) is enabled from a base station, and a controller configured to control whether or not to generate feedback information with respect to a resource preset for receiving a signal from the base station according to whether or not an inactive section of the Cell DTX and the resource overlap.

### [Effect of Invention]

It is possible to provide a terminal, a base station, a wireless communication system, and the like enabling processing related to Cell DTX/DRX to be efficiently performed.

### [Brief Description of Drawings]

Fig. 1 is a diagram illustrating an example of a wireless communication system according to a first embodiment;
Fig. 2 is a diagram illustrating an example of a functional configuration diagram of a base station;
Fig. 3 is a diagram illustrating an example of a functional configuration diagram of a terminal;
Fig. 4 is a diagram illustrating an example of a processing sequence of the wireless communication system in the first embodiment;
Fig. 5 is a diagram illustrating an example of processing in a terminal according to the first embodiment;
Fig. 6 is a diagram illustrating an example of a relationship between resources set by resource allocation information and an active period and an inactive period of Cell DTX;
Fig. 7 is a diagram illustrating an example in which processing of the first embodiment is reflected in a specification;
Fig. 8 is a diagram illustrating an example of processing in a terminal according to a second embodiment;
Fig. 9 is a diagram illustrating an example in which processing of the second embodiment is reflected in a specification;
Fig. 10 is a diagram illustrating an example of resources allocated for the base station to transmit a signal;
Fig. 11 is a diagram illustrating an example in which processing of a third embodiment is reflected in a specification;
Fig. 12 is a diagram illustrating another example in which the processing of the third embodiment is reflected in the specification;
Fig. 13 is an example of a hardware configuration diagram of the base station in the wireless communication system; and
Fig. 14 is an example of a hardware configuration diagram of the terminal in the wireless communication system.

### [Description of Embodiments]

Hereinafter, the present embodiment will be described in detail with reference to the drawings. Problems and embodiments in the present specification are merely examples, and do not limit the scope of rights of the present application. In particular, the technology of the present application can be applied to even different expressions as long as the expressions are technically equivalent even if the expressions are different, and the scope of rights is not limited. Each embodiment can be appropriately combined within a range in which the processing contents do not contradict each other.

In addition, terms and technical contents described in the present specification may be appropriately used as terms and technical contents described in a specification or a contribution as a communication standard such as 3GPP. Such specifications are described in Non Patent Documents 1 to 14, for example.

Hereinafter, embodiments of a base station, a terminal, and a wireless communication system disclosed in the present application will be described in detail with reference to the drawings. Note that the following embodiments do not limit the disclosed technology.

### [Core of Problem]

First, the core of a problem in the prior art will be described before the description of each embodiment. This problem is what the inventors have newly found as a result of studying the prior art in detail and has not been conventionally known, to which attention needs to be paid.

In a phaysical downlink shared channel (PDSCH; hereinafter referred to as SPS-PDSCH in some cases) using semi-persistent scheduling (SPS), in a case where it is not possible to receive SPS-PDSCH from a base station at a resource preset for transmitting PDSCH, a terminal generates a NACK as HARQ feedback information. In addition, the terminal transmits the generated NACK to the base station as HARQ feedback information.

In addition, in the inactive period of Cell DTX, the base station does not transmit a signal in a cell in the inactive period. Therefore, for example, in a case where the inactive period of Cell DTX and a resource preset for transmitting SPS-PDSCH overlap, the base station does not transmit the signal (SPS-PDSCH) at the resource preset for transmitting SPS-PDSCH.

On the other hand, the terminal does not receive SPS-PDSCH from the base station at the resource preset for transmitting SPS-PDSCH since the base station is not transmitting SPS-PDSCH. Therefore, the terminal generates NACK and transmits the generated NACK as HARQ feedback information.

Here, in the inactive period of Cell DTX, the base station and the terminal transmit the generated NACK as HARQ feedback information although there is a possibility that the base station and the terminal may mutually recognize that the base station does not transmit SPS-PDSCH. Therefore, there is a possibility that the utilization efficiency of resources may decrease. In addition, the generation and transmission processing of the HARQ feedback information, which is performed on the terminal side, and processing in association with the reception of the HARQ feedback information, which is performed on the base station side, also happen, and power consumption in both the terminal and the base station is thus affected as well.

Note that, although an example in which a downlink signal that is transmitted from the base station to the terminal and the HARQ feedback information with respect to the downlink signal are transmitted from the terminal to the base station has been described, there is a possibility that the same thing may happen even in a case where an uplink signal from the terminal to the base station and HARQ feedback information with respect to the uplink signal are transmitted from the base station to the terminal.

In summary, for example, in a case where the inactive period of Cell DTX/DRX and a resource preset for transmitting a signal overlap, there is a possibility that a situation in which extra power consumption is caused may happen. Therefore, it becomes important to perform processing related to Cell DTX/DRX in consideration of a relationship between the inactive period of Cell DTX/DRX and the resource preset for transmitting a signal. As described above, this problem is what the inventors have newly found as a result of studying the prior art in detail and has not been conventionally known. Hereinafter, each embodiment of the present application for solving this problem will be described in order.

### [First Embodiment]

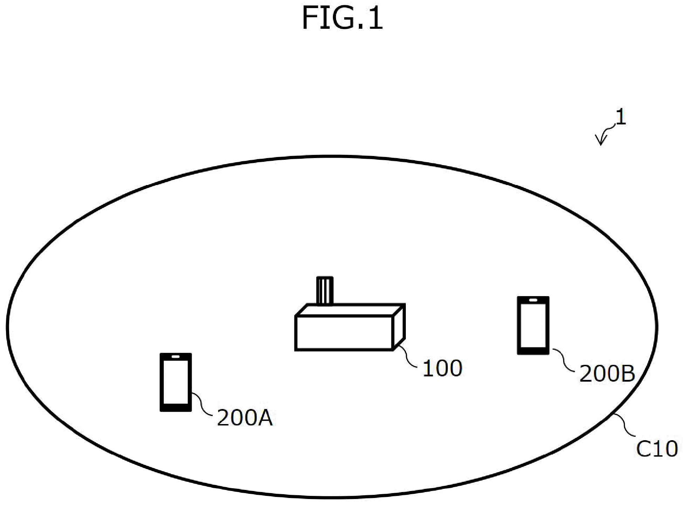

Fig. 1 is a diagram illustrating an example of a wireless communication system 1 according to a first embodiment. The wireless communication system 1 has a base station 100, a terminal 200A, and a terminal 200B. Note that the base station 100 forms a cell C10. Note that the terminal 200A and the terminal 200B will be simply referred to as a terminal 200 in a case where they are not distinguished from each other. Note that the terminal 200 is present in the cell C10.

Note that the base station 100 may be, for example, a small radio base station (including a micro radio base station, a femto radio base station, and the like) such as a macro radio base station, a pico radio base station, and other wireless base stations of various scales, and may be rephrased as a wireless communication device, a communication device, a transmission device, and the like. In addition, the terminal 200 may be, for example, various devices having a wireless communication function, such as a mobile phone, a smartphone, a personal digital assistant (PDA), a personal computer, a vehicle, an airplane, and a drone, or a wireless terminal of a device (a sensor device or the like) mounted on a robot, an AV device, a household appliance, an office appliance, a vending machine, other household appliances, an industrial device, or the like, and may be rephrased as a wireless communication device, a communication device, a reception device, a mobile station, or the like.

The base station 100 is connected to a network via a wired connection with a network device (an upper-level device or another base station) (not illustrated). Note that the base station 100 may be connected to the network device wirelessly instead of in a wired manner.

The base station 100 may be separated into different devices having a wireless communication function with the terminal 200 and a digital signal processing and control function, respectively. In this case, a device having the wireless communication function can be referred to as a remote radio head (RRH), and a device having a digital signal processing and control function can be referred to as a base band unit (BBU). In addition, the RRH may be installed to protrude from the BBU, and these may be connected to each other in a wired manner with an optical fiber or the like therebetween. Alternatively, these may be connected wirelessly. In addition, the base station 100 may be separated into, for example, a central unit (CU), a distributed unit (DU), and a radio unit (RU) instead of the RRH and the BBU described above. The DU includes, for example, a function of a media access control (MAC) layer. In addition, the DU may include, for example, a function of a radio link control (RLC) layer. In addition, the RU includes at least a radio frequency (RF) radio circuit. Note that the DU and the RU may be integrated.

On the other hand, the terminal 200 communicates with the base station 100 by wireless communication.

Note that, in a case where a radio resource control (RRC) connection is not established between the base station 100 and the terminal 200, the base station 100 performs processing for establishing the RRC connection.

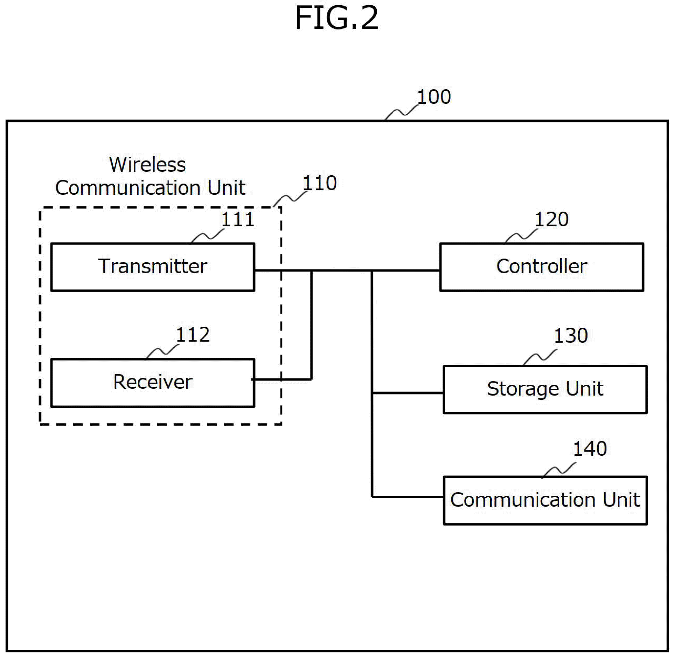

Next, the base station 100 will be described. Fig. 2 is a diagram illustrating an example of a functional configuration diagram of the base station 100. The base station 100 includes a wireless communication unit 110, a controller 120, a storage unit 130, and a communication unit 140.

The wireless communication unit 110 includes a transmitter 111 and a receiver 112, and performs wireless communication with the terminal 200. Specifically, the transmitter 111 transmits, for example, a downlink signal such as a signal of a random access procedure, a signal of an RRC layer, a downlink data signal, and a downlink control signal to the terminal 200.

In addition, the receiver 112 can receive, for example, uplink signals such as the signal of the random access procedure, the signal of the RRC layer, an uplink data signal, and an uplink control signal transmitted from the terminal 200.

The controller 120 controls the base station 100. Specifically, the controller 120 can control establishment of the RRC connection with the terminal 200, signal processing of a signal received by the receiver 112, creation of a transmission block (TB), mapping of the transmission block to a radio resource, and the like.

The storage unit 130 can store, for example, the downlink data signal.

The communication unit 140 is connected to a network device (for example, an upper-level device or another base station device) in a wired manner or wirelessly to perform communication. The data signal directed to the terminal 200 received by the communication unit 140 can be stored in the storage unit 130.

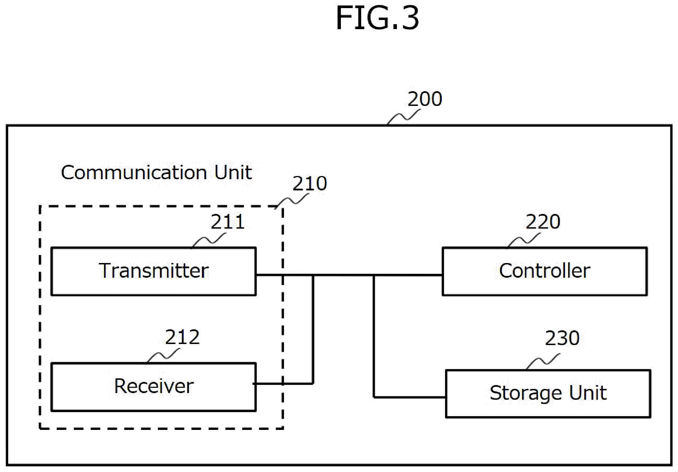

Next, the terminal 200 will be described. Fig. 3 is a diagram illustrating an example of a functional configuration diagram of the terminal 200. As illustrated in Fig. 3, the terminal 200 includes a communication unit 210, a controller 220, and a storage unit 230. Each of these components is connected to each other so that signals and data can be input and output in one direction or in both directions. Note that the communication unit 210 can be described separately as a transmitter 211 and a receiver 212.

The transmitter 211 transmits a data signal and a control signal by wireless communication via an antenna. Note that the antenna may be common for transmission and reception. The transmitter 211 transmits, for example, an uplink signal such as a signal of a random access procedure, a signal of an RRC layer, an uplink data signal, and an uplink control signal.

The receiver 212 receives, for example, a downlink signal such as the signal of the random access procedure, a downlink data signal, and a downlink control signal transmitted from the base station 100. In addition, the signal that is received may include, for example, a reference signal that is used for channel estimation and demodulation.

The controller 220 controls the terminal 200. Specifically, the controller 220 can control establishment of an RRC connection with the base station 100, signal processing of a signal received by the receiver 212, creation of a transmission block (TB), mapping of the transmission block to a radio resource, and the like.

The storage unit 230 can store, for example, the uplink data signal. In addition, the storage unit 230 can store configuration information (or setting information) related to wireless communication transmitted from the base station 100.

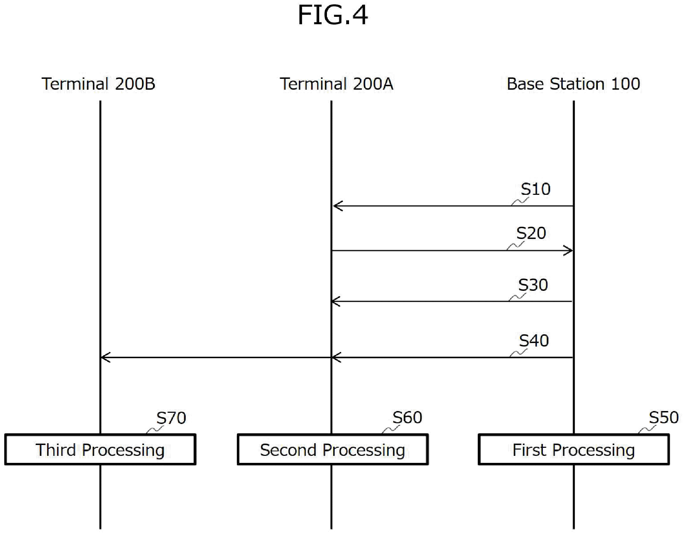

Next, processing between the base station 100 and the terminal 200 in the wireless communication system 1 according to the first embodiment will be described using Fig. 4. Fig. 4 is a diagram illustrating an example of the processing sequence of the wireless communication system 1 in the first embodiment. Note that, in Fig. 4, the terminal 200A is described as a terminal for which a resource for a downlink signal has been set in advance, and the terminal 200B is described as a terminal for which no resources for a downlink signal have been set in advance. Note that, in Fig. 4, it is assumed that the setting of Cell DTX has been set in advance. Note that the setting of Cell DTX is set in, for example, the terminal 200 using a signal of the RRC layer before the sequence illustrated in Fig. 4. Note that the setting of Cell DTX is set using, for example, a signal that transmits the same information into the same cell C10, such as a mater information block (MIB) or a system information block 1 (SIB1).

The transmitter 111 of the base station 100 transmits a signal including resource allocation information to the terminal 200A (step S10). Note that the signal including the resource allocation information is, for example, a second signal. In addition, the second signal is, for example, a signal of the RRC layer. The resource allocation information is an example of the second information.

When receiving the signal including the resource allocation information from the base station 100 (step S10), the receiver 212 of the terminal 200A sets a configuration in accordance with the resource allocation information. In addition, when the setting of the configuration in accordance with the resource allocation information is completed to the base station 100, the transmitter 211 of the terminal 200A transmits a response signal with respect to the signal including the resource allocation information. The configuration in accordance with the resource allocation information will be described below.

The transmitter 111 of the base station 100 transmits a signal including information for enabling the resource set by the resource allocation information (step S30). The signal including the information for enabling the resource set by the resource allocation information is an example of a third signal. Note that the third signal is, for example, a physical downlink control channel (PDCCH). In addition, the information for enabling the resource set by the resource allocation information is an example of third information. When receiving the signal including the information for enabling the resource set by the resource allocation information, the controller 220 of the terminal 200A controls the receiver 220 to receive the downlink signal at the resource in accordance with the resource allocation information.

Next, the transmitter 111 of the base station 100 transmits a signal including information indicating the enabling of Cell DTX to the terminals 200A and 200B in the cell C10 (step S40). Note that the signal including the information indicating the enabling of Cell DTX is an example of a first signal. Note that the first signal is, for example, a signal of a physical layer (for example, PDCCH) or a signal of an RRC layer that can be transmitted to the plurality of terminals 200. Note that the information indicating the enabling of Cell DTX is an example of first information. In addition, when Cell DRX is enabled, the base station 100 performs first processing that is processing in accordance with Cell DTX in the cell C10 (step S50). Note that the first processing is, for example, processing of transmitting a signal to the terminal 200 in the cell C10 in the active period and not transmitting a signal to the terminal 200 in the cell C10 in the inactive period (or non-active period).

In addition, when Cell DTX is enabled, the terminal 200B performs third processing that is processing in accordance with Cell DTX (step S70). Specifically, for example, the terminal 200B controls to monitor the signal via the cell C10 in the active period of Cell DTX and controls not to monitor the signal via the cell C10 in the inactive period.

In addition, when Cell DTX is enabled, the terminal 200A performs second processing that is processing in accordance with Cell DTX (step S60). Note that, specifically, in addition to the third processing, processing of controlling whether or not to generate feedback information with respect to the overlapping resource is performed according to whether or not the inactive period and a resource set by the allocation information of the enabled resource overlap. Specifically, for example, in a case where the inactive period and the resource set by the allocation information of the enabled resource overlap, the terminal 200A does not generate the feedback information with respect to the overlapping resource.

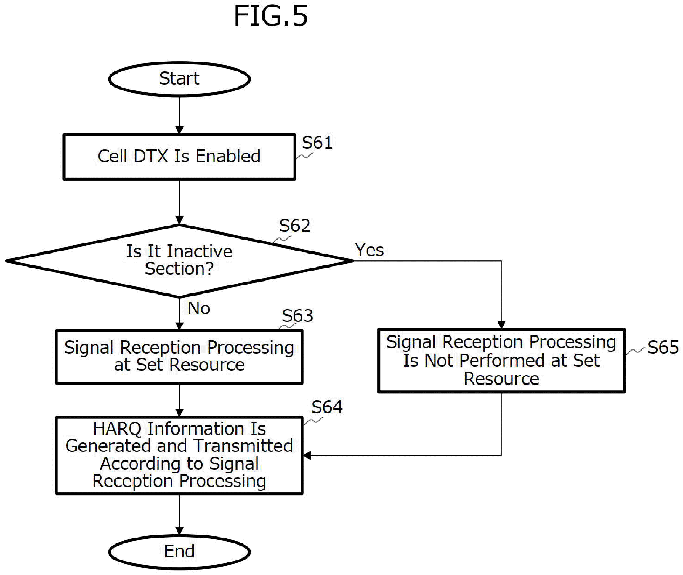

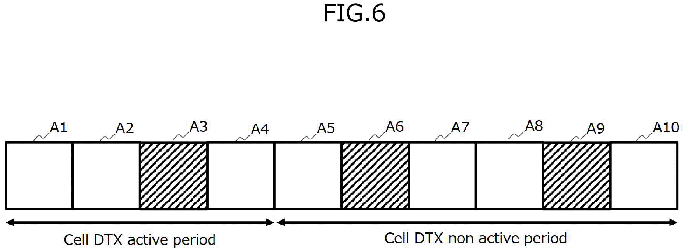

Here, an example of a portion of the second processing different from the third processing will be described using Fig. 5 and Fig. 6. Fig. 5 is a diagram illustrating an example of an operation flow in the terminal 200A. In addition, Fig. 6 is a diagram illustrating an example of a relationship between the resources set by the resource allocation information and the active period and inactive period of Cell DTX.

The controller 220 of the terminal 200A enables Cell DTX with respect to the cell C10 (step S61). The controller 220 of the terminal 200A determines whether or not the current section is an inactive section. (Step S62)

For example, as illustrated in Fig. 6, among time sections A1 to A10, active sections of Cell DTX are time sections A1 to A4, and inactive sections of Cell DTX are time sections A5 to A10. In addition, the time sections A1 to A10 are an example of a configuration in accordance with the resource allocation information, and among the time sections A1 to A10, the time sections A3, A6, and A9 indicate resources allocated in advance for signal transmission. Note that the time section is, for example, any of units in a time axis such as a slot, a subframe, and a frame. In addition, in the step S62, for example, in the case of the time sections A1 to A4, the current sections are determined as active sections, and in the case of the time sections A5 to A10, the current sections are determined as inactive sections. The signal that is transmitted by the resource allocated in advance is, for example, SPS-PDSCH.

In a case where the time section is an active section (step S62: No), the controller 220 of the terminal 200A performs signal reception processing at the set resource. For example, in the time section A3 in Fig. 6, the controller 220 controls the receiver 212 to receive a signal from the base station 100.

In addition, the controller 220 of the terminal 200A generates HARQ feedback information according to the result of the reception processing and transmits the generated HARQ feedback information (step S64). For example, the controller 220 of the terminal 200A generates ACK as the HARQ feedback information in a case where data decoding succeeds, and generates NACK as the HARQ feedback information in a case where the data is not received or the data decoding fails. Note that the HARQ feedback information is an example of the feedback information.

In a case where the time section is an inactive section (step S62: Yes), the controller 220 of the terminal 200A controls not to perform signal reception processing at the set resource. For example, in the time sections A6 and A9 in Fig. 6, the controller 220 controls the receiver 212 not to receive a signal from the base station 100. In addition, in a step S65, since reception processing is not performed, the controller controls not to perform the generation of HARQ feedback information associated with the reception processing.

As described above, in the first embodiment, in a case where the inactive section of Cell DTX and the set resource overlap, the terminal 200 does not perform HARQ feedback information with respect to the resource. Therefore, since the generation and transmission of HARQ feedback information in the terminal 200 are not performed, for example, the power consumption in the terminal 200 can be reduced. In addition, in a case where the inactive section of Cell DTX and the set resource overlap, the base station 100 does not perform reception of HARQ feedback information with respect to the resource. Therefore, since processing in association with the reception of HARQ feedback information in the base station 100 is not performed, for example, the power consumption in the base station 100 can be reduced. In other words, it becomes possible to efficiently perform processing related to Cell DTX/DRX.

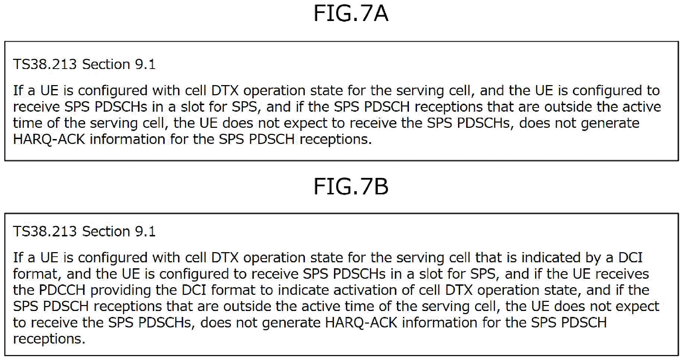

Note that the first embodiment can be reflected in a specification by, for example, describing the embodiment as illustrated in Fig. 7. Note that Fig. 7(A) is a diagram illustrating an example in which the processing of the first embodiment is reflected in a specification (TS38.213). For example, Fig. 7(A) is a first example in which the processing of the first embodiment is reflected in the specification (TS38.213), and Fig. 7(B) is a second example in which the processing of the first embodiment is reflected in the specification (TS38.213). A difference between the first example and the second example is the presence or absence of a description related to PDCCH corresponding to the third signal in Fig. 4.

### [Second Embodiment]

In the first embodiment, an example in which the terminal 100 controls not to generate HARQ feedback information when the inactive section of Cell DTX and the set resource overlap has been described. In a second embodiment, a control of determining whether or not to generate HARQ feedback information according to the third signal described in the first embodiment will be described. Note that, in the second embodiment, the wireless communication system, the base station, and the terminal are the same as those in the first embodiment, and the description thereof will be thus omitted.

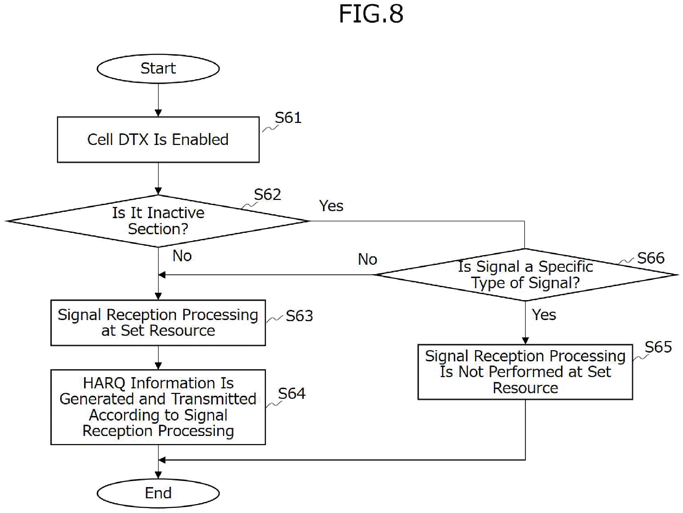

An example of an operation flow in the terminal 200A in the second embodiment will be illustrated using Fig. 8. Fig. 8 is a diagram illustrating an example of processing in a terminal according to the second embodiment. Note that Fig. 8 illustrates processing that is included in the second processing illustrated in Fig. 4, and description of portions overlapping with Fig. 5 will be omitted.

In a case where the time section is an inactive section (step S62: Yes), the controller 220 of the terminal 200A determines whether or not the signal received in the step S40 is a specific type of signal (step S66). Note that the specific type of signal is, for example, a signal of the RRC layer. In addition, for example, a signal different from the specific type of signal is, for example, PDCCH.

In a case where the signal is the specific type of signal (step S66: Yes), the processing in the step S65 is performed. In addition, in a case where the signal is not the specific type of signal (step S66: No), the processing in the step S63 and the step S64 is performed. Note that, when the processing in the step S63 is performed via the step S66, for example, no signals are received in the time section A6, and NACK is thus generated as HARQ feedback information in the processing in the step S64.

As described above, in the second embodiment, in a case where the inactive section of Cell DTX and the set resource overlap, the terminal 200 controls whether or not to perform the generation and transmission of HARQ feedback according to the type of a signal that enables Cell DTX. With the above-described control, it is possible to control not to perform the generation and transmission of HARQ feedback at the time of the specific type of signal. On the other hand, in the case of a signal other than the specific type of signal, it becomes possible to perform conventional control. For example, in a case where the signal that enables Cell DTX is a signal of the RRC layer, the controller controls not to perform the generation and transmission of HARQ feedback. Therefore, it becomes possible to control not to perform processing in association with the reception of HARQ feedback information in the base station 100, and for example, the power consumption in the terminal 200 or the base station 100 can be reduced. In other words, it becomes possible to efficiently perform processing related to Cell DTX/DRX. For example, in a case where the signal that enables Cell DTX is a signal of a physical layer (for example, PDCCH), in consideration of a possibility that the terminal may fail to receive the signal of the physical layer that enables or disables Cell DTX, the controller controls to perform the generation and transmission of HARQ feedback. Therefore, when the terminal fails to receive a signal of a physical layer that disables Cell DTX, it is possible to avoid the transmission from the base station and an impossibility of corresponding to HARQ feedback information.

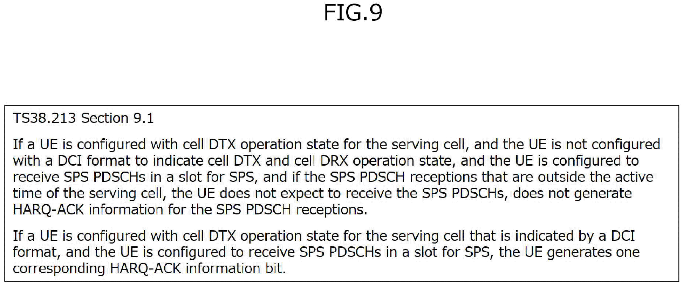

Note that the second embodiment can be reflected in a specification by, for example, describing the embodiment as illustrated in Fig. 9. Note that Fig. 9 is a diagram illustrating an example in which the processing of the second embodiment is reflected in a specification (TS38.213).

### [Third Embodiment]

In the first embodiment, an example in which the terminal 100 controls not to generate HARQ feedback information when the inactive section of Cell DTX and the set resource overlap has been described. In the second embodiment, a control of determining whether or not to perform the generation of HARQ feedback information according to the third signal has been described. In a third embodiment, an example in which a HARQ-ACK codebook is used as the HARQ feedback information will be described. Note that the wireless communication system, the base station, and the terminal are the same as those in the first embodiment, and the description thereof will be thus omitted.

The HARQ-ACK codebook will be described. The HARQ-ACK codebook is a method in which ACK/NACK information from a plurality of slots or a plurality of carriers is multiplexed into one signal (for example, in PUCCH or PUSCH) and transmitted as HARQ feedback information. Note that there are, for example, three types of HARQ-ACK codebooks.

A first type of HARQ-ACK codebook is a semi-static method. This generates, for example, ACK/NACK of HARQ with respect to the reception position of the downlink signal set based on the RRC signal.

A second type of HARQ-ACK codebook is a dynamic method. This is, for example, actually scheduled with downlink control information and generates ACK/NACK of HARQ only with respect to the downlink signal actually transmitted from the base station.

A third type of HARQ-ACK codebook is a one-shot method. This triggers HARQ feedback with respect to all configured cells (or serving cells) or configured cells (or serving cells) and/or a subset of a HARQ process with the downlink control information.

### <HARQ Feedback Using First Type of HARQ-ACK Codebook>

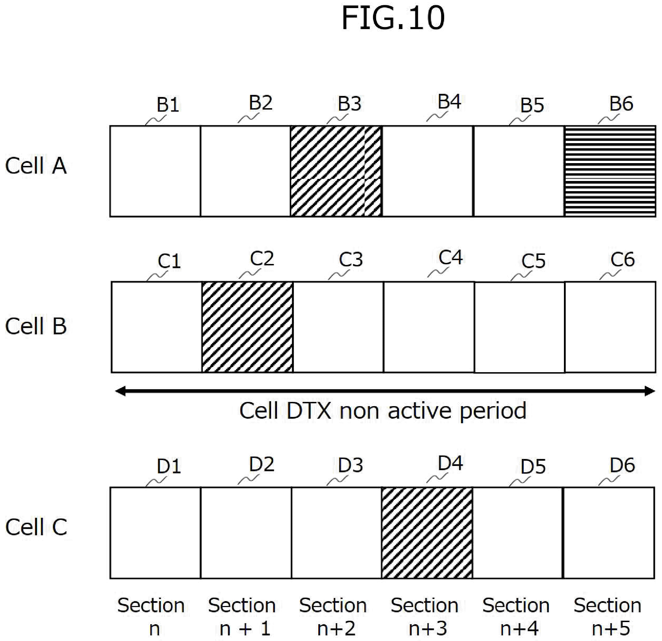

HARQ feedback using the first type of HARQ-ACK codebook that is performed by the terminal 200 in the third embodiment will be described using Fig. 10. Fig. 10 is a diagram illustrating an example of resources allocated for the base station to transmit a signal.

As illustrated in Fig. 10, in the base station 100, it is assumed that a cell A, a cell B, and a cell C are set in the terminal 200. Note that the cell B is, for example, the cell C10. Here, it is assumed that a resource of SPS-PDSCH is set in the cell B. In addition, in the cell B, Cell DTX is enabled. In addition, in the cell A, time sections B1 to B6 are formed over a section n to a section n + 5, and a time section B3 indicates the position of a resource preset for transmitting a downlink signal. In addition, the time section B6 indicates a time section in which the terminal transmits the HARQ feedback. In addition, in the cell B, time sections C1 to C6 are formed over a section n to a section n + 5, and a time section C2 indicates the position of a resource preset for transmitting a downlink signal. In addition, in the cell C, time sections D1 to D6 are formed over a section n to a section n + 5, and a time section D4 indicates the position of a resource preset for transmitting a downlink signal.

In the case of Fig. 10, the terminal 200 uses, for example, the method described in the first embodiment with respect to the cell B. That is, since the time sections C1 to C6 are inactive sections in the cell B, the terminal 200 does not perform processing of generating HARQ feedback with respect to the time section C2. Therefore, in the time section B6, information of the HARQ feedback that is transmitted from the terminal 200 includes the ACK/NACK information corresponding to the reception processing in the time section B3 and the ACK/NACK information corresponding to the reception processing in the time section D4.

Note that the terminal 200 may be configured to generate HARQ feedback only with respect to SPS-PDSCH. In this case, HARQ feedback is not generated with respect to the set SPS-PDSCH resource overlapping the inactive section of Cell DTX. For example, the terminal 200 does not perform the processing of generating HARQ feedback with respect to the time section C2. Therefore, in the time section B6, information of the HARQ feedback that is transmitted from the terminal 200 includes the ACK/NACK information corresponding to the reception processing in the time section B3 and the ACK/NACK information corresponding to the reception processing in the time section D4.

Note that, in the cell B in Fig. 10, HARQ feedback may be generated using the method of the second embodiment. In short, the terminal 200 controls whether or not to generate ACK or NACK information with respect to the resource in the time section C2 according to the type of the signal including the information that enables Cell DTX. For example, in a case where the signal that enables Cell DTX is a signal of the RRC layer, the terminal 200 controls not to perform the generation and transmission of HARQ feedback. For example, in a case where the signal that enables Cell DTX is a signal of the physical layer (for example, PDCCH), the terminal 200 controls to perform the generation and transmission of HARQ feedback. Note that, in a case where the ACK or NACK information has been generated with respect to the resource in the time section C2, the terminal 200 transmits, for example, HARQ feedback information including three pieces of ACK or NACK information.

Note that the terminal 200 may be configured to generate HARQ feedback only with respect to SPS-PDSCH. In this case, the terminal 200 controls whether or not to generate ACK or NACK information with respect to the set SPS-PDSCH resource overlapping the inactive section of Cell DTX according to the type of the signal including the information that enables Cell DTX. For example, in a case where the signal that enables Cell DTX is a signal of the RRC layer, the terminal 200 does not perform processing of generating HARQ feedback with respect to the time section C2. For example, in a case where the signal that enables Cell DTX is a signal of the physical layer (for example, PDCCH), the controller controls to perform the generation and transmission of HARQ feedback. The terminal 200 performs the processing of generating HARQ feedback with respect to the time section C2. Therefore, in the time section B6, information of the HARQ feedback that is transmitted from the terminal 200 includes the ACK/NACK information corresponding to the reception processing in the time section B3, the ACK/NACK information corresponding to the reception processing in the time section C2, and the ACK/NACK information corresponding to the reception processing in the time section D4.

Note that the terminal 200 may be configured to generate HARQ feedback only with respect to a signal of retransmission. For example, in the terminal 200, in Fig. 10, the time section B3 and the time section C2 are resources in which the signal of retransmission is transmitted, and the time section D4 is a resource preset for transmitting a downlink signal. Note that the cell B is an inactive section, but the base station 100 can transmit a signal with respect to the signal of retransmission. Therefore, it is possible to receive the signal retransmitted in the time section C2.

In this case, in the time section B6, information of the HARQ feedback that is transmitted from the terminal 200 includes the ACK or NACK information corresponding to the reception processing in the time section B3 and the ACK or NACK information corresponding to the reception processing in the time section C2.

Note that the information of the HARQ feedback that is transmitted from the terminal 200 may include ACK or NACK information with respect to a signal excluding the retransmission signal that is performed in the inactive sections in the cell B. In short, the terminal 200 generates ACK or NACK with respect to signals that are received in the cell A and the cell C and controls the cell B to generate ACK or NACK according to the type of a signal that is scheduled to be received (whether or not the signal is a retransmission signal).

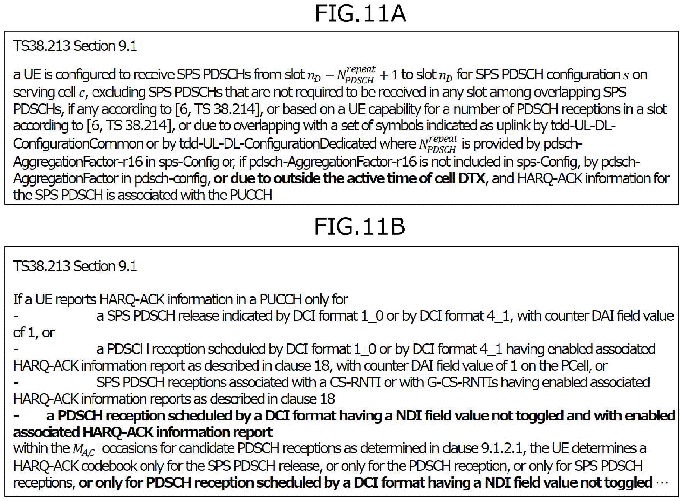

Note that HARQ feedback using the first type of HARQ-ACK codebook in the third embodiment can be reflected in a specification in a manner illustrated in Fig. 11. Note that Fig. 11 is a diagram illustrating an example in which the processing of the third embodiment is reflected in a specification (TS38.213). For example, in Fig. 11(A), it is specified in the specification (TS38.213) that, in a case where the HARQ feedback is generated only with respect to SPS-PDSCH, HARQ feedback information (for example, ACK or NACK) is not generated with respect to SPS-PDSCH in the active section. In addition, Fig. 11(B) is an example in which it is specified in the specification (TS38.213) that, in a case where control information indicates retransmission, HARQ report information is generated only with respect to a signal of retransmission.

### <HARQ Feedback Using Second Type of HARQ-ACK Codebook>

HARQ feedback using the second type of HARQ-ACK codebook that is performed by the terminal 200 in the third embodiment will be described.

The controller 220 of the terminal 200 excludes a signal (for example, SPS-PDSCH) scheduled to be transmitted at a resource in an inactive section of Cell DTX (in other words, other than the DTX active time) from the HARQ feedback information, generates HARQ feedback information generated with respect to a resource in a Cell DTX active section, and collectively transmits the HARQ feedback information.

Note that, as described in the second embodiment, the controller 220 of the terminal 200 may determine whether or not to generate HARQ feedback information with respect to a resource in an inactive section of Cell DTX according to the type of the signal including the information that enables Cell DTX. For example, in a case where the signal that enables Cell DTX is a signal of the RRC layer, the controller controls not to perform the generation and transmission of HARQ feedback. For example, in a case where the signal that enables Cell DTX is a signal of the physical layer (for example, PDCCH), the controller controls to perform the generation and transmission of HARQ feedback.

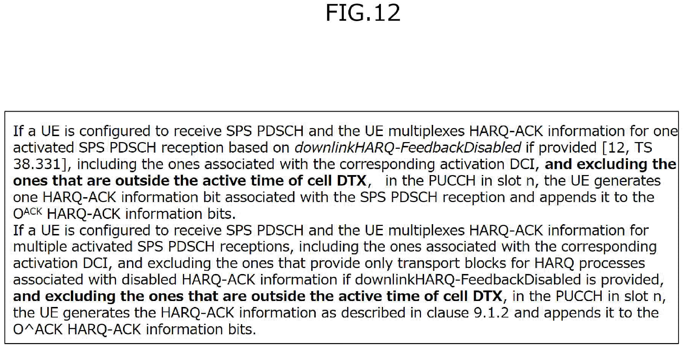

Note that HARQ feedback using the second type of HARQ-ACK codebook in the third embodiment can be reflected in a specification in a manner illustrated in Fig. 12. Note that Fig. 12 is a diagram illustrating an example in which the processing of the third embodiment is reflected in a specification (TS38.213).

### <HARQ Feedback Using Third Type of HARQ-ACK Codebook>

HARQ feedback using the third type of HARQ-ACK codebook that is performed by the terminal 200 in the third embodiment will be described.

The controller 220 of the terminal 200 excludes a signal (for example, PDSCH) scheduled to be transmitted at a resource in an inactive section of Cell DTX (in other words, other than the DTX active time) from the HARQ information, generates HARQ feedback information generated with respect to a resource in a Cell DTX active section, and collectively transmits the HARQ feedback information.

Note that, as described in the second embodiment, the controller 220 of the terminal 200 may determine whether or not to generate HARQ feedback information with respect to a resource in an inactive section of Cell DTX according to the type of the signal including the information that enables Cell DTX. For example, in a case where the signal that enables Cell DTX is a signal of the RRC layer, the controller controls not to perform the generation and transmission of HARQ feedback. For example, in a case where the signal that enables Cell DTX is a signal of the physical layer (for example, PDCCH), the controller controls to perform the generation and transmission of HARQ feedback.

As described above, the terminal 200 controls the generation of the HARQ feedback information by the method described in the first embodiment or the second embodiment. In addition, the terminal 200 can transmit only the generated HARQ feedback information as one piece of feedback information. In addition, the base station 100 can receive only the generated HARQ feedback information as one piece of feedback information and recognize a signal to which each piece of the HARQ feedback information included in the received one piece of feedback information corresponds. Therefore, the base station 100 can perform retransmission control and the like without being affected by HARQ feedback information not generated by the control of the terminal 200.

As described above, in the third embodiment, the terminal 200 can use the methods described in the first embodiment and the second embodiment even in the case of collectively transmitting a plurality of pieces of HARQ feedback information as one piece of feedback information. Therefore, in a case where the inactive section of Cell DTX and the set resource overlap, the terminal controls whether or not to perform the generation and transmission of HARQ feedback information with respect to the resource. With such control, for example, in a case where no HARQ feedback information is generated with respect to the resource, it is possible to reduce information that is included in one piece of feedback information.

### [Hardware Configuration of Each Device in Each Embodiment]

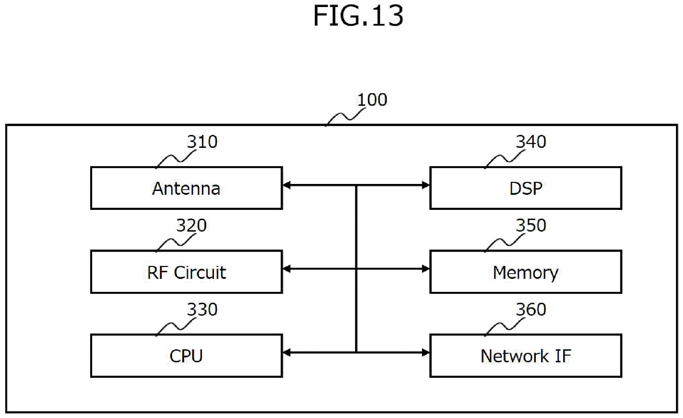

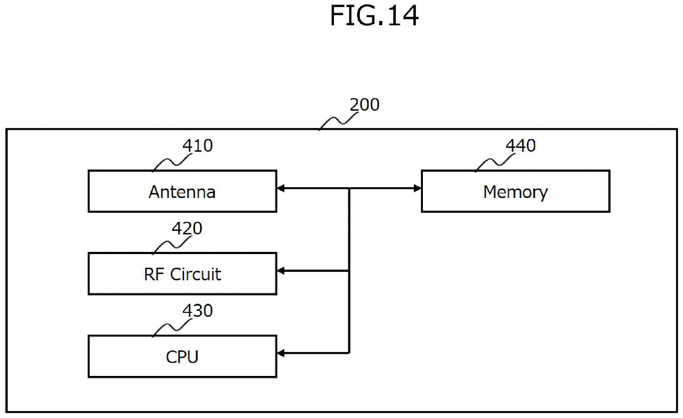

A hardware configuration of each device in the wireless communication system of each embodiment will be described based on Fig. 13 and Fig. 14.

Fig. 13 is a diagram illustrating an example of a hardware configuration of the base station 100. As illustrated in Fig. 13, the base station 100 includes, for example, a radio frequency (RF) circuit 320 including an antenna 310, a central processing unit (CPU) 330, a digital signal processor (DSP) 340, a memory 350, and a network interface (IF) 360 as hardware components. The CPU 330 is connected via a bus so as to be capable of inputting and outputting various signals and data signals. The memory 350 includes, for example, at least one of a random access memory (RAM) such as a synchronous dynamic random access memory (SDRAM), a read only memory (ROM), and a flash memory, and stores a program, control information, and a data signal.

The correspondence between the functional configuration of the base station 100 illustrated in Fig. 2 and the hardware configuration of the base station 100 illustrated in Fig. 13 will be described. The transmitter 111 and the receiver 112 (or the wireless communication unit 110) are realized by, for example, the RF circuit 320, or the antenna 310 and the RF circuit 320. The controller 120 is realized by, for example, the CPU 330, the DSP 340, the memory 350, a digital electronic circuit (not illustrated), and the like. Examples of the digital electronic circuit include an application specific integrated circuit (ASIC), a field programmable gate array (FPGA), and a large scale integration (LSI). In addition, the storage unit 130 is realized by, for example, the memory 350. In addition, the communication unit 140 is implemented by, for example, the network IF 360.

Note that, in the base station 100, a plurality of data signals transmitted in a plurality of sub-bands can be generated, but a filter for generating the data signals may be configured independently for each sub-band.

Fig. 14 is a diagram illustrating an example of a hardware configuration of the terminal 200. As illustrated in Fig. 14, the terminal 200 includes, for example, an RF circuit 420 including an antenna 410, a CPU 430, and a memory 440 as hardware components. Furthermore, the terminal 200 may include a display device such as a liquid crystal display (LCD) connected to the CPU 430. The memory 440 includes, for example, at least one of a RAM such as an SDRAM, a ROM, and a flash memory, and stores a program, control information, and a data signal.

The correspondence between the functional configuration of the terminal 200 illustrated in Fig. 3 and the hardware configuration of the terminal 200 illustrated in Fig. 14 will be described. The transmitter 211 and the receiver 212 (or the communication unit 210) are realized by, for example, the RF circuit 420, or the antenna 410 and the RF circuit 420. The controller 220 is realized by, for example, the CPU 430, the memory 440, a digital electronic circuit (not illustrated), and the like. Examples of the digital electronic circuit include an ASIC, an FPGA, and an LSI. In addition, the storage unit 230 is realized by, for example, the memory 440.

Note that the embodiments may be appropriately combined within a range without inconsistency.

Note that, in each embodiment, an example of the base station and the terminal has been described, but the disclosed technology is not limited thereto, and can be applied to various devices such as electronic devices mounted on automobiles, trains, airplanes, artificial satellites, and the like, electronic devices carried by drones and the like, robots, AV devices, household appliances, office devices, vending machines, and other household appliances.

In addition, in each embodiment, the fifth generation mobile communication has been described as an example. However, the disclosed technology is not limited to these. For example, the disclosed technology may be applied to mobile communication of different generations such as a sixth generation and a seventh generation.

### [Reference Signs List]

1 Wireless communication system
100 Base station
C10 Cell
110 Wireless communication unit
111 Transmitter
112 Receiver
120 Controller
130 Storage unit
140 Communication unit
200 200A 200B Terminal
210 Communication unit
211 Transmitter
212 Receiver
220 Controller
230 Storage unit
310 Antenna
320 RF circuit
330 CPU
340 DSP
350 Memory
360 Network IF
410 Antenna
420 RF circuit
430 CPU
440 Memory

## Claims

1. A terminal, comprising:
a receiver configured to receive a first signal including first information indicating that Cell DTX (discontinuous transmission) is enabled from a base station; and
a controller configured to control whether or not to generate feedback information with respect to a resource preset for receiving a signal from the base station according to whether or not an inactive section of the Cell DTX and the resource overlap.

2. The terminal according to claim 1, wherein
the first signal is a signal that is transmitted from the base station to one or more terminals including the terminal in a cell.

3. The terminal according to claim 1, wherein
the receiver receives a second signal including second information for setting the resource from the base station, and
the controller sets the resource according to the second information.

4. The terminal according to claim 1, wherein
the receiver receives a third signal including third information that is information that enables the resource from the base station, and
the controller controls to enable reception of a signal at the resource according to the third information and to perform processing with respect to the resource.

5. The terminal according to claim 1, wherein
the controller controls not to generate feedback information with respect to the overlapping resource in a case where the first signal is a specific type of signal and controls to generate feedback information with respect to the overlapping resource in a case where the first signal is a signal different from the specific type of signal.

6. The terminal according to claim 5, wherein
the specific type of signal is a signal of an RRC layer, and a signal in which the first signal is different from the specific type of signal is PDCCH.

7. The terminal according to claim 1, further comprising: a transmitter configured to generate the feedback information with respect to a resource other than the overlapping resource among the resources and to transmit the feedback information.

8. A base station, comprising:
a transmitter configured to transmit a first signal including first information indicating that Cell DTX (discontinuous transmission) is enabled to a terminal; and
a receiver configured to receive feedback information with respect to a resource preset for the terminal to receive a signal that is generated according to whether or not an inactive section of the Cell DTX and the resource overlap.

9. The base station according to claim 8, further comprising:
a controller configured to control not to perform reception processing on the feedback information with respect to the overlapping resource.

10. A wireless communication system, comprising:
a base station configured to transmit a first signal including first information indicating that Cell DTX (discontinuous transmission) is enabled; and
a terminal configured to receive the first signal and to control whether or not to generate feedback information with respect to a resource preset for receiving a signal from the base station according to whether or not an inactive section of the Cell DTX and the resource overlap.
